# EUROPÄISCHE PATENTSCHRIFT

(11) **EP 1 239 205 B1**
(45) Veröffentlichungstag und Bekanntmachung des Hinweises auf die Patenterteilung: **06.10.2004**
(21) Anmeldenummer: 02003024.3
(22) Anmeldetag: 12.02.2002
(51) Int. Cl.: F16L 11/22, F16L 59/14, F16L 11/118, F16L 59/153

(54) **Flexibles vorgedämmtes Leitungsrohr**
Flexible pre-insulated conduit
Conduite flexible pré-isolée

(30) Priorität: 02.03.2001 DE 20103677 U
(43) Veröffentlichungstag der Anmeldung: 11.09.2002
(73) Patentinhaber: BRUGG Rohr AG, Holding, 5200 Brugg (CH)
(72) Erfinder: Oeschger, Alfred, 5276 Will (AG) (CH)

(56) Entgegenhaltungen:
- EP-A- 0 892 207
- EP-A- 0 974 784
- DE-U- 20 009 556
- US-A- 3 994 673
- US-A- 4 194 536
- US-A- 4 302 266
- US-A- 4 991 876

## Beschreibung

Die vorliegende Erfindung betrifft ein flexibles, vorgedämmtes Leitungsrohr nach Anspruch 1.

Für die Gewinnung von Sonnenenergie mittels Sonnenkollektoren sind Verbindungsleitungen zwischen Sonnenkollektor und Wärmespeicher erforderlich, die die Wärmeträgerflüssigkeit transportieren.

Da es sich um ein Kreislaufsystem handelt - die vom Sonnenkollektor erwärmte Wärmeträgerflüssigkeit wird nach der Wärmeabgabe an das im Warmwasserspeicher befindliche Wasser zum Sonnenkollektor zurücktransportiert - ist eine Vorlaufleitung sowie eine Rücklaufleitung erforderlich.

Sowohl die Vorlaufleitung als auch die Rücklaufleitung sind von einer Wärmedämmschicht umgeben, welche die Wärmeverluste verringern sollen.

Darüber hinaus weisen derartige Leitungen ein elektrisches Kabel z. B. für Sensoren oder Stromversorgung auf.

Aus den DE-U-296 17 936 ist eine flexible Mehrfachrohrleitung für den eingangs erwähnten Zweck bekannt, welche aus einem gemeinsamen, flexiblen UV- und hochtemperaturbeständigen, wasserabweisenden und wasserdampfdiffusionsdichten Wärmedämmschlauch und darin eingeführten Leitungsrohren aufgebaut ist. Der Vorteil dieser Mehrfachrohrleitung besteht darin, daß Vor- und Rücklaufleitung sowie ggfs. das elektrische Kabel als eine Einheit verlegt werden können. Durch die UV- und ozonbeständige Ausführung der Wärmedämmung kann auf einen zusätzlichen Schutz der Mehrfachrohrleitung verzichtet werden.

Aus der DE-U 200 09 556 ist ein Doppelrohr zur Verbindung von einem Sonnenkollektor mit einem Speicher bekannt, welches aus zwei mit einer eigenen Isolierung versehenen nebeneinander liegenden, biegsamen Rohren, einem Kabel sowie einem die Rohre und das Kabel umfassenden Mantel besteht. Der Mantel besteht vorzugsweise aus einem Netzgewebe. Der Vorteil dieses Doppelrohres ist darin zu sehen, daß die Anschlußarbeiten des Doppelrohres an den Sonnenkollektor und den Speicher vereinfacht werden.

Die EP-A-0 974 784 offenbart ein flexibles vorgedämmtes Leitungsrohr zur Verbindung eines Sonnenkollektors mit einem Warmwasserspeicher, bestehend aus zwei nebeneinander angeordneten Einzelrohren, die eine gemeinsame Wärmedämmschicht aufweisen sowie einem die wärmegedämmten Einzelrohre eng umfassenden geflochtenen Schutzmantel. An dem Schutzmantel sind Befestigungsösen zum Montieren oder Befestigen des Leitungsrohres vorgesehen.

Die US-A- 4 991 876 beschreibt ein flexibles, verstärktes Rohr für Warmwasserbereiter. Das mediumführende Rohr besteht aus Gummi oder einem anderen nichtmetallischen Werkstoff und weist an seiner äußeren Oberfläche ein Geflecht aus rostfreien Drähten auf.

Der vorliegenden Erfindung liegt die Aufgabe zugrunde, ein flexibles vorgedämmtes Leitungsrohr bereitzustellen, welches einfach verlegbar und sowohl für die Innen- als auch für die Außenverlegung geeignet ist. Insbesondere soll das Leitungsrohr gegen UV-Strahlung, Ozon und gegen den Angriff von Vögeln, Mardern und anderem Getier geschützt sein.

Die Aufgabe wird in verblüffend einfacher Weise durch die Merkmale des Anspruchs 1 gelöst.

Weitere vorteilhafte Ausgestaltungen sind in den Unteransprüchen aufgeführt.

Der wesentliche Vorteil der Erfindung ist darin zu sehen, daß das zu einem wesentlichen Anteil aus rostfreien Drähten bestehende Gestricke oder Geflecht, welches noch Textilfilamente enthält die unter dem Gestricke oder Geflecht gelegene Wärmedämmschicht weitestgehend gegen äußere Angriffe schützt und somit die Lebensdauer des Leitungsrohres erhöht. Das Geflecht oder Gestricke ermöglicht, daß auf UV- und ozonbeständig machende Zusätze zum Wärmedämmwerkstoff verzichtet werden kann. Durch die Verwendung von dünnen, weichen Drähten aus rostfreiem Stahl wird die Flexibilität des Leitungsrohres nur unwesentlich verringert. Beim Anschließen des Leitungsrohres ist ein Ausfransen des Geflechtes bzw. Gestrickes nicht zu befürchten.

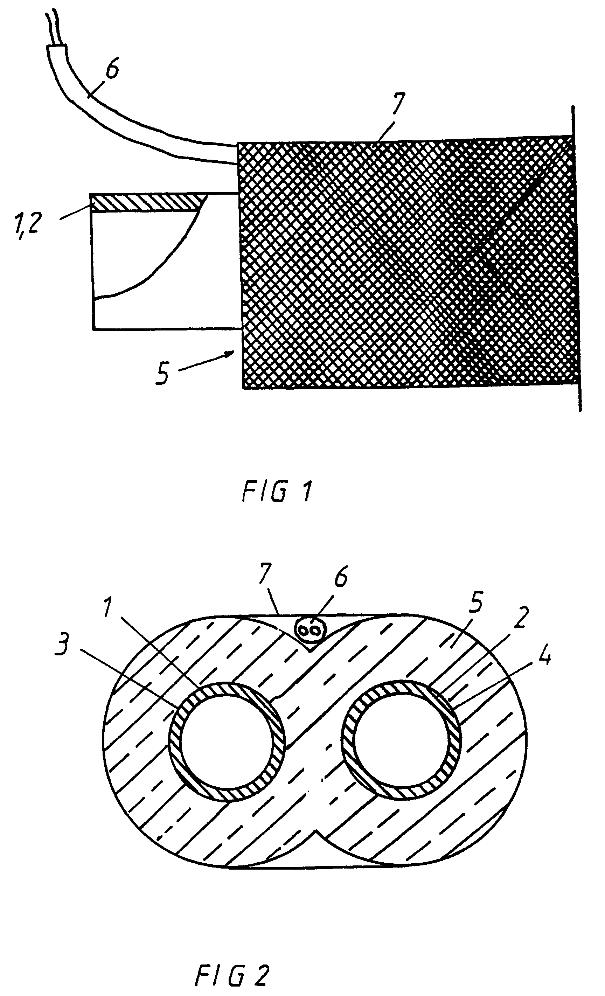

Die Erfindung ist anhand des in den Figuren 1 und 2 schematisch dargestellten Ausführungsbeispiels näher erläutert.

Figur 1 zeigt eine seitliche Ansicht - z. T. geschnitten - des erfindungsgemäßen Leitungsrohres. Das Leitungsrohr besteht aus zwei nebeneinander liegenden Rohren 1 und 2, von denen das eine als Vorlauf und das andere als Rücklauf in einem Kreislauf zwischen einem Sonnnenkollektor und einem Warmwasserspeicher dient.

Die Rohre 1 und 2 sind entweder Metallrohre z. B. Kupfer oder rostfreien Stahl oder Kunststoffrohre, wobei der Kunststoff eine Beständigkeit bis 200 °C haben sollte. Sie können glatt oder in gewellter Ausführung vorliegen. Die Rohre 1 und 2 sind in Öffnungen 3 und 4 einer Wärmedämmschicht 5 untergebracht. Die Wärmedämmschicht 5 besteht aus einem EPDM extrem niedriger Dichte. Die Wärmedämmschicht 5 kann ein einheitliches Dämmprofil für beide Rohre 1 und 2 sein. Nach einer Alternativlösung besteht die Wärmedämmschicht 5 aus je einem gesonderten Wärmedämmprofil für jedes Rohr 1 und 2.

Das Leitungsrohr weist ferner ein elektrisches Kabel 6 auf, welches mit Sensoren verbunden ist, welche die Temperatur messen, die dann über das Kabel 6 einer Zentralstelle zugeleitet und dort ausgewertet werden.

Die Rohre 1 und 2, die Wärmedämmschicht 5 und das Kabel 6 sind von einer Hülle 7 umgeben, die als Geflecht oder Gestricke ausgebildet ist. Die Aufbauelemente des Geflechts oder Gestrickes sind dünne Drähte aus rostfreiem Stahl, die extrem weich und daher gut biegbar sind und von daher die Flexibilität des Leitungsrohres nur unwesentlich beeinträchtigen. Die Drähte haben einen Durchmesser in der Größenordnung von 0,10 mm.

Das Geflecht oder Gestricke enthältneben den Drähten aus rostfreiem Stahl noch Textilfilamente z. B. Multifilamente aus Polyester.

Die optische Bedeckung der Hülle 7 sollte mindestens 50 % betragen, damit eine erhöhte Beständigkeit gegen Ozon und ultraviolette Strahlung erzielt wird. Darüber hinaus dient eine hohe optische Bedeckung und der Anteil an Drähten aus rostfreiem Stahl als nachhaltiger Schutz gegen Tierfraß z. B. Vogelpick oder auch gegen Marderbiß.

## Patentansprüche

1. Flexibles vorgedämmtes Leitungsrohr zur Verbindung eines Sonnenkollektors mit einem Warmwasserspeicher, bestehend aus zwei nebeneinander angeordneten Einzelrohren(1,2), die jedes für sich eine gesonderte oder eine gemeinsame Wärmedämmschicht (5) aufweisen sowie einem die wärmegedämmten Einzelrohre (1,2) eng umfassenden Geflecht oder Gestrick (7), aus rostfreien, weichen Feindrähten, wobei das Geflecht oder Gestrick (7) Textilfilamente enthält.

2. Flexibles Leitungsrohr nach Anspruch 1, **dadurch gekennzeichnet, daß** die Textilfilamente vielfasrige Polyesterfilamente sind.

3. Flexibles Leitungsrohr nach Anspruch 1 oder 2, **dadurch gekennzeichnet, daß** die Textilfilamente schwer entflammbar sind.

4. Flexibles Leitungsrohr nach einem der Ansprüche 1 bis 3, **dadurch gekennzeichnet, daß** die Feindrähte Monofildrähte sind.

5. Flexibles Leitungsrohr nach einem der Ansprüche 1 bis 4, **dadurch gekennzeichnet, daß** der Durchmesser der Fein- bzw. Monofildrähte zwischen 0,05 und 0,20 mm beträgt.

6. Flexibles Leitungsrohr nach einem der Ansprüche 1 bis 5, **dadurch gekennzeichnet, daß** die optische Bedeckung des Geflechtes oder Gestrickes (7) zwischen 50 % und 100 % liegt.

7. Flexibles Leitungsrohr nach einem der Ansprüche 1 bis 6, **dadurch gekennzeichnet, daß** die Einzelrohre (1,2) Glattrohre aus weichem Kupfer, gewellte Rohre aus rostfreiem Stahl und/oder glatte oder gewellte Rohre aus Kunststoff sind.

8. Flexibles Leitungsrohr nach einem der Ansprüche 1 bis 7, **dadurch gekennzeichnet, daß** die Wärmedämmschicht (5) aus FCKW-freiem EPDM-Schaum besteht.

9. Flexibles Leitungsrohr nach Anspruch 8, **dadurch gekennzeichnet, daß** die Wärmedämmschicht (5) aus einem längsgeschlitzten Schlauch mit einem oder zwei Kanälen für die Einzelrohre (1,2) besteht.

10. Flexibles Leitungsrohr nach einem der Ansprüche 1 bis 9, **dadurch gekennzeichnet, daß** in einem zwischen den wärmegedämmten Einzelrohren (1,2) und dem Geflecht oder Gestrick (7) gebildeten Hohlraum eine elektrische Leitung (6) verläuft.

## Claims

1. Flexible pre-insulated conduit for connecting a solar collector to a hot-water tank, comprising two individual tubes (1, 2) arranged adjacent to each other, each of which has its own or a collective heat-insulation layer (5) as well as a protective fabric or sleeve (7) which is tightly woven around the individual heat-insulated tubes (1, 2) and which comprises thin stainless steel wires and also contains textile filaments.

2. Flexible conduit according to Claim 1, **characterized by** the fact that the textile filaments are made from polyester multifilaments.

3. Flexible conduit according to Claim 1 or 2, **characterized by** the fact that the textile filaments are not readily flammable.

4. Flexible conduit according to one of the Claims 1 through 3, **characterized by** the fact that the thin wires are monofilament wires.

5. Flexible conduit according to one of the Claims 1 through 4, **characterized by** the fact that the diameter of the thin or monofilament wires is between 0.05 and 0.20 mm.

6. Flexible conduit according to one of the Claims 1 through 5, **characterized by** the fact that the optical covering of fabric or sleeve (7) lies between 50% and 100%.

7. Flexible conduit according to one of the Claims 1 through 6, **characterized by** the fact that the individual tubes (1, 2) are smooth tubes made of soft copper, corrugated tubes made of stainless steel and/or smooth or corrugated tubes made of plastic.

8. Flexible conduit according to one of the Claims 1 through 7, **characterized by** the fact that heat-insulation layer (5) is made from CFC-free EPDM foam.

9. Flexible conduit according to Claim 8, **characterized by** the fact that heat-insulation layer (5) comprises longitudinally slit tubing with one or two channels for individual tubes (1, 2).

10. Flexible conduit according to one of the Claims 1 through 9, **characterized by** the fact that an electrical cable (6) runs in a cavity formed between heat-insulated individual tubes (1, 2) and fabric or sleeve (7).

## Revendications

1. Tuyau de conduite flexible préisolé destiné au raccordement d'un capteur solaire à un accumulateur, composé de deux tuyaux indépendants disposés l'un à côté de l'autre (1, 2) qui présentent pour chacun d'eux une couche de calorifugeage (5) commune ou à part, ainsi qu'une tresse ou un tissu à mailles (7) entourant fermement les tuyaux indépendants calorifugés (1, 2), en fins fils métalliques souples et inoxydables, la tresse ou le tissu à mailles (7) contenant des filaments textiles.

2. Tuyau de conduite flexible selon la revendication 1, **caractérisé par le fait que** les filaments textiles sont des filaments en polyester multifibreux.

3. Tuyau de conduite flexible selon la revendication 1 ou 2, **caractérisé par le fait que** les filaments textiles sont ignifugés.

4. Tuyau de conduite flexible selon l'une quelconque des revendications 1 à 3, **caractérisé par le fait que** les fins fils métalliques sont des fils métalliques monobrins.

5. Tuyau de conduite flexible selon l'une quelconque des revendications 1 à 4, **caractérisé par le fait que** le diamètre des fils métalliques fins et/ou monobrins est compris entre 0,05 et 0,20 mm.

6. Tuyau de conduite flexible selon l'une quelconque des revendications 1 à 5, **caractérisé par le fait que** le recouvrement optique de la tresse ou du tissu à mailles (7) est compris entre 50 % et 100 %.

7. Tuyau de conduite flexible selon l'une quelconque des revendications 1 à 6, **caractérisé par le fait que** les tuyaux indépendants (1, 2) sont des tuyaux lisses en cuivre souple, des tuyaux ondulés en acier inoxydable et/ou des tuyaux lisses ou ondulés en plastique.

8. Tuyau de conduite flexible selon l'une quelconque des revendications 1 à 7, **caractérisé par le fait que** la couche de calorifugeage (5) est constituée d'une mousse EPDM sans CFC.

9. Tuyau de conduite flexible selon la revendication 8, **caractérisé par le fait que** la couche de calorifugeage (5) est constituée d'un flexible fendu dans sa longueur avec un ou deux canaux pour les tuyaux indépendants (1, 2).

10. Tuyau de conduite flexible selon l'une quelconque des revendications 1 à 9, **caractérisé par le fait qu'**une ligne électrique (6) passe dans une cavité formée entre les tuyaux indépendants calorifugés (1, 2) et la tresse ou le tissu à mailles (7).
